# EUROPEAN PATENT SPECIFICATION

(11) **EP 0 603 980 B1**
(45) Date of publication and mention of the grant of the patent: **11.06.1997**
(21) Application number: 93203639.5
(22) Date of filing: 22.12.1993
(51) Int. Cl.: A23L 1/24, A23D 7/02, A23L 1/19

(54) **Method for preparing an emulsion of adjustable viscosity**
Verfahren zur Herstellung einer Emulsion mit regulierbarer Viskosität
Procédé pour préparer une émulsion dont la viscosité est ajustable

(30) Priority: 23.12.1992 NL 9202246
(43) Date of publication of application: 29.06.1994
(73) Proprietor: Verenigde Coöperatieve Melkindustrie Coberco B.A., NL-7201 NM Zutphen (NL)
(72) Inventor: Heuvelman, Lambertus, NL-7462 DR Rijssen (NL); Klarenbeek, Gijsbert, NL-7421 AX Deventer (NL); van den Boogaard, Cornelis, NL-7213 BW Gorssel (NL)
(74) Representative: Smulders, Theodorus A.H.J., Ir.

(56) References cited:
- EP-A- 0 052 899
- EP-A- 0 076 549
- EP-A- 0 129 346
- EP-A- 0 195 365
- EP-A- 0 485 663
- GB-A- 2 063 273
- GB-A- 2 229 077
- US-A- 3 892 873
- NETH.MILK DAIRY JOURNAL vol. 37 , 1983 pages 37 - 40 J.N.DE WIT ET AL. 'Evaluation of functional properties of whey protein concentrates and whey protein isolates.1 Isolation and characterization'
- ZUIVELZICHT vol. 77 , 1985 pages 634 - 637 J.N.DE WIT ET AL. 'Produktinovatie op basis van weieiwitten'

## Description

This invention relates to the preparation of a heat-stable emulsion of adjustably increased viscosity. The invention also relates to the preparation of a foodstuff based on such emulsion.

In the preparation of liquid foodstuffs, the structure or consistency is an important parameter in connection with the organoleptic sensation.

Besides the taste, this consistency, typically also referred to as viscosity, determines the perception of a foodstuff to a considerable extent.

The structure is mainly determined by the interaction between the different constituents and in particular that with water. The extent to which the water present can be bound is determinative of the height of the viscosity.

In general, to obtain a desired structure, a thickening or gelling agent is added to the aqueous foodstuff. Examples of such thickening agents which, even in a minor concentration, are capable of binding much water and hence of structuring an aqueous foodstuff, are polysaccharides such as gums, starches and carrageenans. Accordingly, in the preparation of sour products such as dressings, it is particularly starch and gums that are used as thickening agents.

However, these polysaccharides lack the ability to stabilize a dispersion of fat or oil in water, i.e., they are not emulsifiers.

In contrast with these polysaccharides, protein, such as egg albumin, has both gelling and emulsifying properties. Because egg protein is relatively expensive and has good functional properties only in fresh condition, other, cheaper protein sources were looked for.

This investigation was focused in particular on the applicability of whey proteins both as emulsifier and as thickener in the preparation of mayonnaise-like products.

It is known that proteins and in particular whey proteins can form structures upon heating (cf. European patent specification 0 195 365 and "Zuivelzicht", 77, (30/31) 1985, pp. 634-637). However, this concerns exclusively stationary heating techniques, because it is known that structures of whey proteins obtained through heating are not resistent to shearing forces.

A number of drawbacks are associated with such stationary heating.

In the first place, by the use of this technique only small volumes can be prepared because heating occurs through conduction. Accordingly, this method is unsuitable for the preparation of an industrial semifinished product because it is practically impossible to prepare a volume in excess of one liter in this manner.

Another drawback is that in the case of a somewhat larger volume the heat transfer through conduction gives rise to differences in structure at the periphery and in the centre of the packing. Moreover, heating in this manner imposes strict requirements on the packing material in which the batchwise heating occurs.

Finally, the use of batchwise processes generally yields gelled products, whereas for foodstuffs a paste-like structure is generally more desired.

European patent specification 0 129 346 describes the heating of product while flowing (referred to hereinafter as 'flow-heating') in the preparation of sauces, the formulation including the use of whey proteins to partly replace the fat.

Although these proteins will contribute to the viscosity to some extent, the viscosity is apparently insufficient. This can be derived not only from the fact that the products to be prepared must incorporate a combination of thickeners such as starch, guar gum and locust bean gum, but also from the manner in which the product must be packaged.

The fact is that after the heater the product is preferably packaged while hot, so that the product can set in the package. In addition, after the heater the product must be exposed to a minimum of shearing forces because otherwise the structure breaks and a thin product results.

Finally, in order to meet the requirement that the time of contact with the wall be shorter than one second, only a swept-surface heat exchanger can be used in this method.

The object of the present invention is to provide a method which, employed in a continuous process operation, yields stable and heat-resistent structures whose viscosity is adjustable within certain limits without using other constituents than proteins as thickener.

The invention is based in particular on the insight that through a heat activation step proteins, and particularly whey proteins, can be brought into a condition such that upon subsequent flow-heating in an acid environment they acquire a structure of highly increased viscosity compared with the nonactivated native protein, this structure being so stable that after the heating step ingredients can be added to the cold emulsion. This last requires that the structure can be subjected to shearing forces.

According to the invention a heat-stable oil-in-water emulsion of adjustably increased viscosity is obtained by carrying out the following steps:
a) preparing a mixture to be emulsified, comprising 10-30 wt.% fat and 3-15 wt.% protein based on the total composition;
b) subjecting this mixture to an emulsifying treatment under such conditions that a "coarse" emulsion is obtained;
c) flow-heating the thus obtained emulsion to the "activation temperature" of 65-85°C, whereafter the product is maintained at this temperature for a time sufficient to effect a heat activation of the proteins;
d) vigorously homogenizing the product prior or subsequent to this flow-heating, such that a "fine" emulsion is obtained;
e) acidifying the thus obtained product with an edible acid at a temperature equal to or lower than the activation temperature mentioned in step c) to a pH value between 3.8 and 4.5;
f) flow-heating the acidified product for a period of 1-5 minutes at a temperature between 80 and 100°C;
g) cooling the acidified heated product to the desired packaging temperature;
h) packaging the product thus obtained.

In the method according to the invention, the activating heating treatment in step c) effects a decrease of the so-called N.S.I. The N.S.I. is the "Nitrogen Solubility Index", which is determined by the method as described by De Wit in "Nederlands Melk- en Zuiveltijdschrift, 42 (1988), page 157. This N.S.I., determined at a pH of 4.6, corresponds well with the extent of protein denaturation.

In the method according to the invention, the decrease of the N.S.I. at an activation temperature of 72°C is approximately 15%.

The deliberate partial denaturation of the whey protein before the final structuring is essential to the method according to the invention. This is in contrast with the generally accepted view that the whey protein should not be denatured before the final structuring.

According to a preferred embodiment of the invention the mixture to be emulsified according to step a) comprises 10-20 wt.% fat and 5-10 wt.% whey protein.

The emulsifying treatment according to step b) preferably occurs at a temperature between 50 and 65°C.

The flow-heating treatment during step c) is preferably carried out at a temperature in the range of 65-80°C.

The homogenization according to step d) is preferably carried out at a pressure of at least 15 MPa and a temperature of 60-85°C. The product thus homogenized is preferably cooled to a temperature below 20°C and in particular to a temperature below 10°C.

During step e) acidification is effected to a pH value between 3.8 and 4.5. In principle any nutrient acid can be used for this purpose. In particular, lactic acid or citric acid can be used.

The heating operation according to step f) preferably lasts a period of 2-4 minutes at a temperature of approximately 90°C and cooling according to step g) is preferably effected to a temperature below 10°C.

The method according to the invention has the additional advantage that by virtue of its continuous character any desired packaging material can be used in step h).

The whey proteins which are used in the method according to the invention may have been prepared by a method which is known per se.

According to a suitable method of preparation, they are obtained by ultrafiltration, which may or may not be followed by diafiltration of cheese whey, for instance. These methods are known per se and described, for instance, in Neth. Milk Dairy J. 37 (1983) 37-41. The ultrafiltration leads to a particular ratio of the protein content to the solid content and hence to a particular ratio of whey protein to ash. It is customary to characterize whey protein concentrates (WPC) so obtained on the basis of the whey protein content, so that WPC-80, for instance, is a whey protein concentrate comprising 80% (undenatured) whey proteins.

The whey proteins can also be obtained, for instance, by desugaring cheese whey, optionally in combination with desalting through electrodialysis or ion exchange, until a protein content, based on the solids, of preferably at least 35% is achieved.

In the preparation of the whey proteins it is essential that the proteins be denatured to the least possible extent. In determining the N.S.I. (at pH 4.6) this value must preferably be above 75%.

A WPC obtained through spray-drying, suitable for use in the method according to the invention, possesses a whey protein content between 40 and 95%.

In the emulsion according to the invention, any fat or any oil, both of vegetable and animal origin, such as milk fat, can be used. It is also possible to use mixtures of such vegetable and animal oils and fats which are suitable for the preparation of foodstuff emulsions such as spreads and sauces.

By virtue of its continuous character, the method according to the invention is so flexible that it is possible to prepare not only end products such as foodstuffs, and in particular spreads and sauces, but also semimanufactured products, such as base materials for the preparation of pharmaceuticals, for instance ointments, etc. The method is eminently suitable for the preparation of sauces, because no other thickeners than whey proteins need to be used therein.

The invention will now be further explained in and by the following examples.

### Example 1

An emulsion was prepared starting from the following constituents and in the specified amounts:

| | |
|---|---|
| WPC 80 | 9.5 % |
| Sunflower oil | 15.0 % |
| Glucose syrup DE 20 | 2.0 % |
| Trisodium citrate | 0.1 % |
| Lactic acid (10%) | 8.0 % |
| Water | 65.4 % |

For the preparation of the emulsion the WPC 80 and the sodium citrate were dissolved in water of 60°C, whereafter the oil, which had been priorly adjusted to a temperature of 60°C, was added. Then emulsification took place for 2 minutes, using a Silverson suspension-emulsifying appliance.

Then the emulsion was heated to the activation temperature, whereafter homogenization took place at this temperature, using a homogenization pressure of 40 MPa. Then the emulsion was cooled to a temperature of 10°C, whereafter the glucose syrup was added as well as an amount of lactic acid such that the pH attained a value of 4.2.

Then the emulsion was heated to a temperature of 90°C on a swept-surface heat exchanger, whereafter the emulsion was maintained at this temperature for 3 minutes, followed by cooling to a temperature of 10°C in a swept-surface heat exchanger, whereafter the product was aseptically packaged.

In the preparation two activation temperatures were investigated, viz. 65°C (variant 1) and 72°C (variant 2). After 24 h storage at 5°C the viscosity was determined at 20°C, utilizing a rotary viscometer, type Haake Rotovisco RV 12 with measuring system SV1.

The viscosity was calculated in each case at a shearing rate of 100 sec⁻¹. Thus the following results were obtained:

| | Activation temperature | |
|---|---|---|
| | 65°C | 72°C |
| Viscosity (Pa.s) | 0.11 | 0.28 |

It appears from this value that when an activation temperature is selected where no protein denaturation occurs, the viscosity of the end product is low; a higher activation temperature yields a clearly increased viscosity.

### Example 2

The method as described in example 1 was repeated, but now an activation temperature of 72°C was selected, whilst the fat content was raised to 20% based on the total composition, so that 5% less water was added. The method was carried out according to two variants, sunflower oil being used in variant 1 and milk fat in variant 2.

Otherwise the procedure was as described in example 1.

In this case, too, the viscosity was determined after storage for 24 h at 5°C. The viscosity was determined at 20°C and a shearing rate of 100 sec⁻¹. The results are summarized in the following table.

| | 20% sunflower oil | 20% milk fat |
|---|---|---|
| Viscosity (Pa.s) | 0.89 | 3.2 |

Both products appeared to be eminently suitable as bases for sauces. Liquid components such as acids, juices and alcohol, but also solid components, for example cut vegetables, could be added without any difficulty and it was striking in particular that the viscosity remained sufficiently high and that the structure was maintained. The taste of the products so obtained was excellent too.

It is not requisite to use a swept-surface heat exchanger for heating. It is also possible to use other heating appliances, known per se, whereby comparable products are obtained. This is demonstrated in the following examples. In the method according to these examples, use was made of a tubular heater for heating a product at a pH of 4.2.

### Example 3

An emulsion was prepared starting from the following constituents in the specified amounts by weight.

| | |
|---|---|
| WPC 80 | 9.5 % |
| Water | 65.4 % |
| Trisodium citrate | 0.1 % |
| Sunflower oil | 15.0 % |
| Lactic acid (10%) | 8.0 % |
| Glucose syrup DE 20 | 2.0 % |

In the preparation of the emulsion the procedure was as described in example 1, but now the heating of the acidified product was not carried out in a swept-surface heat exchanger but in a tubular heat exchanger. The heating temperature was 90°C and the product was maintained at this temperature for 3 minutes.

Three activation temperatures were investigated, as indicated hereinafter:
- Variant 1:: 68°C
- Variant 2:: 74°C
- Variant 3:: 78°C

After the samples had been stored at 5°C for 24 h, the viscosity was determined using the method as described in example 1. The results were as follows:

### Results:

| | Activation temperature | | |
|---|---|---|---|
| | 68°C | 74°C | 78°C |
| Viscosity (Pa.s) | 0.61 | 0.74 | 0.92 |

These products, too, had a smooth appearance and a so-called smooth mouth feel. The taste was judged as excellent, the sensation being neutral to tart.

According to a variant of the method according to the invention, the whey protein is activated after the homogenization. The coarse emulsion is first homogenized at 60°C, whereafter the fine emulsion is activated. In this way, too, an excellent result is obtained, as appears from the following example.

### Example 4

An emulsion was prepared starting from the composition and the percentages by weight as indicated in example 3.

The whey protein concentrate and the sodium citrate were dissolved in water and heated to a temperature of 60°C. Thereafter the sunflower oil, which had been adjusted to a temperature of 60°C, was added, whereafter emulsification took place for 2 minutes using an Ultra Turrax appliance.

The product thus obtained was homogenized at 60°C at a pressure of 40 MPa. This fine emulsion was flow-heated to the activation temperature, whereafter it was maintained at this temperature for 10 seconds. Then the emulsion, while flowing, was cooled to a temperature of 10°C.

Then the glucose syrup was added as well as an amount of lactic acid such that the pH attained a value of 4.2.

Then the emulsion was heated to a temperature of 90°C using a tubular pasteurizer, whereafter the mixture was maintained at this temperature for 3 minutes. Then, in a next section of the tubular pasteurizer, the product was cooled to 20°C, wherafter it was packaged aseptically.

In this method three activation temperatures were investigated, viz.:
- Variant 1:: 70°C
- Variant 2:: 74°C
- Variant 3:: 78°C

The viscosity was determined in the same manner as indicated in examples 1 through 3 and the following results were obtained:

| | Activation temperature | | |
|---|---|---|---|
| | 70°C | 74°C | 78°C |
| Viscosity (Pa.s) | 0.25 | 0.41 | 1.14 |

The quality of the above products was judged as excellent and the taste was found to be neutral. In particular, the products appeared to have a fine smooth structure and to give rise to an agreeable mouth feel. The viscosity according to variant 1 appeared to be on the low side for a sauce base; variant 2 appeared to be suitable for the preparation of thinner sauces, while variant 3 appeared to be suitable for the more viscous types.

## Claims

1. A method for the preparation of an emulsion, characterized in that a heat-stable oil-in-water emulsion of adjustably increased viscosity is obtained by carrying out the following steps:
a) preparing a mixture to be emulsified, comprising 10-30 wt.% fat and 3-15 wt.% protein based on the total composition;
b) subjecting this mixture to an emulsifying treatment under such conditions that a "coarse" emulsion is obtained;
c) flow-heating the thus obtained emulsion to a temperature of 65-85°C, whereafter the product is maintained at this temperature for a time sufficient to effect a heat activation of the proteins;
d) homogenizing the product prior or subsequent to this flow-heating;
e) acidifying the thus obtained product at a temperature equal to or lower than the temperature mentioned in step c) to a pH value between 3.8 and 4.5;
f) heating the acidified product for a period of 1-5 minutes at a temperature between 80 and 100°C;
g) cooling the acidified heated product to the desired packaging temperature;
h) packaging the product thus obtained.

2. A method according to claim 1, characterized in that the mixture to be emulsified according to step a) comprises 10-20 wt.% fat and 5-10 wt.% whey protein.

3. A method according to claims 1-2, characterized in that the emulsifying treatment according to step b) occurs at a temperature between 50 and 65°C.

4. A method according to one or more of claims 1-3, characterized in that the flow-heating of the emulsion during step c) occurs at a temperature of 65-80°C.

5. A method according to one or more of claims 1-4, characterized in that the homogenization according to step d) occurs at a pressure of at least 15 MPa and a temperature of 60-85°C.

6. A method according to one or more of claims 1-5, characterized in that the product homogenized according to step d) is cooled to a temperature below 20°C and in particular below 10°C.

7. A method according to one or more of claims 1-6, characterized in that heating according to step f) takes place for a period of 2-4 minutes at a temperature of approximately 90°C.

8. A method according to one or more of claims 1-7, characterized in that cooling according to step g) proceeds to a temperature below 10°C.

9. An emulsion obtained by the use of the method according to one or more of claims 1-8.

10. A foodstuff obtained by the use of the method according to claim 9.

## Patentansprüche

1. Verfahren zur Herstellung einer Emulsion, dadurch gekennzeichnet, daß eine hitzebeständige Öl-in-Wasser-Emulsion einstellbar erhöhter Viskosität erhalten wird durch Durchführung der folgenden Schritte:
a) Herstellen einer zu emulgierenden Mischung, enthaltend 10 - 30 Gew.% Fett und 3 - 15 Gew.% Protein, bezogen auf die gesamte Zusammensetzung;
b) Aussetzen dieser Mischung einer Emulgierbehandlung unter solchen Bedingungen, daß eine "grobe" Emulsion erhalten wird;
c) Durchflußerhitzen der so erhaltenen Emulsion auf eine Temperatur von 65 - 85°C, wonach das Produkt bei dieser Temperatur für eine Zeit gehalten wird, die ausreichend ist um eine Hitzeaktivierung der Proteine zu bewirken;
d) Homogenisieren des Produkts vor oder im Anschluß an dieses Durchflußerhitzen;
e) Ansäuern des so erhaltenen Produkts bei einer Temperatur, die der im Schritt c) angegebenen Temperatur gleich oder niedriger ist, auf einen pH-Wert zwischen 3,8 und 4,5;
f) Erhitzen des angesäuerten Produkts für eine Zeitspanne von 1 bis 5 Minuten bei einer Temperatur zwischen 80 und 100°C;
g) Abkühlen des angesäuerten erhitzten Produkts auf die gewünschte Verpackungstemperatur;
h) Verpacken des so erhaltenen Produkts.

2. Verfahren nach Anspruch 1, dadurch gekennzeichnet, daß die gemäß Schritt a) zu emulgierende Mischung 10 - 20 Gew.% Fett und 5 - 10 Gew.% Molkeprotein enthält.

3. Verfahren nach den Ansprüchen 1, 2, dadurch gekennzeichnet, daß die Emulgierbehandlung gemäß Schritt b) bei einer Temperatur zwischen 50 und 65°C erfolgt.

4. Verfahren nach einem oder mehreren der Ansprüche 1 - 3, dadurch gekennzeichnet, daß das Durchflußerhitzen der Emulsion während des Schritts c) bei einer Temperatur von 65 bis 80°C erfolgt.

5. Verfahren nach einem oder mehreren der Ansprüche 1 - 4, dadurch gekennzeichnet, daß das Homogenisieren gemäß Schritt d) bei einem Druck von mindestens 15 MPa und einer Temperatur von 60 - 85°C erfolgt.

6. Verfahren nach einem oder mehreren der Ansprüche 1 - 5, dadurch gekennzeichnet, daß das gemäß Schritt d) homogenisierte Produkt auf eine Temperatur unterhalb 20°C, vorzugsweise unterhalb 10°C abgekühlt wird.

7. Verfahren nach einem oder mehreren der Ansprüche 1 - 6, dadurch gekennzeichnet, daß das Erhitzen gemäß Schritt f) für eine Zeitspanne von 2 - 4 Minuten bei einer Temperatur von annähernd 90°C erfolgt.

8. Verfahren nach einem oder mehreren der Ansprüche 1 - 7, dadurch gekennzeichnet, daß das Abkühlen gemäß Schritt g) bis zu einer Temperatur unterhalb 10°C vonstatten geht.

9. Emulsion erhalten durch Anwendung des Verfahrens nach einem oder mehreren der Ansprüche 1 - 8.

10. Nahrungsmittel erhalten durch Anwendung des Verfahrens gemäß Anspruch 9.

## Revendications

1. Méthode de préparation d'une émulsion, caractérisée en ce qu'une émulsion "huile dans eau", stable à la chaleur et de viscosité ajustable, est obtenue en suivant les étapes suivantes :
a) la préparation d'un mélange à émulsionner comprenant 10 à 30 % en poids de graisse et 3 à 15 % en poids de protéine, poids rapportés à la composition totale ;
b) l'application à ce mélange d'un traitement émulsionnant dans des conditions permettant d'obtenir une émulsion "grossière" ;
c) le chauffage en écoulement de l'émulsion ainsi obtenue, à une température comprise entre 65 et 85 °C, le produit étant ensuite maintenu à cette température pendant un temps suffisant pour effectuer l'activation thermique des protéines ;
d) l'homogénéisation du produit, avant ou après ce chauffage en écoulement ;
e) l'acidification du produit ainsi obtenu, à une température inférieure ou égale à la température indiquée à l'étape c), à une valeur de pH comprise entre 3,8 et 4,5 ;
f) le chauffage du produit acidifié, pendant 1 à 5 minutes, à une température comprise entre 80 et 100 °C ;
g) le refroidissement du produit acidifié chauffé, à la température d'emballage voulue ;
h) l'emballage du produit ainsi obtenu.

2. Méthode selon la revendication 1, caractérisée en ce que le mélange à émulsionner selon l'étape a), comprend de 10 à 20 % en poids de graisse et de 5 à 10 % en poids de protéine de petit-lait.

3. Méthode selon l'une ou l'autre des revendications 1 et 2, caractérisée en ce que le traitement émulsionnant selon l'étape b) s'effectue à une température comprise entre 50 et 65 °C ;

4. Méthode selon l'une ou plusieurs des revendications 1 à 3, caractérisée en ce que le chauffage en écoulement de l'émulsion lors de l'étape c) s'effectue à une température comprise entre 65 et 80 °C.

5. Méthode selon l'une ou plusieurs des revendications 1 à 4, caractérisée en ce que l'homogénéisation selon l'étape d) s'effectue à une pression d'au moins 15 MPa et à une température comprise entre 60 et 85 °C.

6. Méthode selon l'une ou plusieurs des revendications 1 à 5, caractérisée en ce que le produit homogénéisé selon l'étape d) est refroidi à une température inférieure à 20 °C, et en particulier, inférieure à 10 °C.

7. Méthode selon l'une ou plusieurs des revendications 1 à 6, caractérisée en ce que le chauffage selon l'étape f) s'effectue pendant 2 à 4 minutes, à une température de 90 °C environ.

8. Méthode selon l'une ou plusieurs des revendications 1 à 7, caractérisée en ce que le refroidissement selon l'étape g) s'effectue à une température inférieure à 10 °C.

9. Emulsion obtenue par la mise en oeuvre de la méthode selon l'une ou plusieurs des revendications 1 à 8.

10. Produit alimentaire obtenu par la mise en oeuvre de l'émulsion selon la revendication 9.
